# EUROPEAN PATENT APPLICATION

(11) **EP 4 708 483 A2**
(43) Date of publication of application: **11.03.2026**
(21) Application number: 25193678.7
(22) Date of filing: 04.08.2025
(51) Int. Cl.: H01M 50/152, H01M 50/186, H01M 50/213, H01M 50/262, H01M 50/358

(54) **SECONDARY BATTERY AND BATTERY PACK INCLUDING THE SECONDARY BATTERY**

(30) Priority: 28.08.2024 KR 20240116106
(71) Applicant: SAMSUNG SDI CO., LTD., Yongin-si, Gyeonggi-do 17084 (KR)
(72) Inventor: KIM, Dae Kyu, 16678 Suwon-si, Gyeonggi-do (KR)
(74) Representative: Gulde & Partner

(57) **Abstract**

The present disclosure relates to a secondary battery and a battery pack including the secondary battery, with the secondary battery being capable of reliably venting gas. The secondary battery including a case, an electrode assembly accommodated inside the case, a cap assembly facing the electrode assembly, a clamping part extending from the case and surrounding the cap assembly, and a notch formed from an inner side surface of the clamping part.

## Description

### BACKGROUND

### 1. Field of the Invention

The present disclosure relates to a secondary battery and a battery pack including the secondary battery.

### 2. Discussion of Related Art

With the proliferation of electronic devices using batteries, such as mobile phones, notebook computers, and electric vehicles, the demand for secondary batteries having high energy density and high capacity has rapidly increased. Accordingly, research and development for improving the performance of a lithium secondary battery are being actively conducted.

A lithium secondary battery is a battery including a positive electrode and a negative electrode having an active material capable of intercalating and deintercalating lithium ions. The battery also includes an electrolyte solution and generates energy through oxidation/reduction reactions when lithium ions are intercalated/deintercalated at the positive and negative electrodes.

The above-described information disclosed in the technology that forms the background of the present disclosure is only intended to improve understanding of the background of the present disclosure, and thus may include information that does not constitute the related/prior art.

### SUMMARY OF THE INVENTION

The present disclosure is directed to providing a secondary battery and a battery pack configured to vent gas.

These and other aspects and features of the present disclosure will be described in or will be apparent from the following description of some embodiments of the present disclosure.

According to an aspect of the present disclosure, a secondary battery includes a case, an electrode assembly accommodated inside the case, a cap assembly facing the electrode assembly, and a clamping part extending from the case surrounding the cap assembly, with a notch being formed from an inner side surface of the clamping part.

A distance from a central axis of the case to the notch may be greater than a distance from the central axis of the case to an end portion of the cap assembly.

The electrode assembly and the cap assembly may face each other in a first direction, the clamping part may include a first clamping body disposed parallel to the first direction, a second clamping body connected to the first clamping body, and a bent part disposed between the first clamping body and the second clamping body, and the notch may be concave from an inner side surface of the bent part.

An angle between a central axis of the case and a central axis of the notch may be greater than or equal to 30° and less than or equal to 45°.

A length from an end portion of the second clamping body to the notch may be greater than or equal to 1.4 mm and less than or equal to 3 mm.

A ratio of a depth of the notch to a thickness of the bent part may be greater than or equal to 0.5 and less than or equal to 0.9.

A depth of the notch may be greater than or equal to 0.15 mm and less than or equal to 0.27 mm.

The notch may be narrower in width toward an outer side surface of the bent part.

The notch may include a first recess extending from the inner side surface of the bent part, and a second recess connected to the first recess and extending from the first recess toward an outer side surface of the bent part, and a width of the second recess may be less than a width of the first recess.

The notch may be provided as a plurality of notches, and notches may extend in a direction that the bent part extends.

The secondary battery may further include a sub-notch spaced apart from the notch and formed in the second clamping body.

A depth of the sub-notch may be less than a depth of the notch.

A ratio of a depth of the sub-notch to a thickness of the second clamping body may be greater than or equal to 0.5 and less than or equal to 0.9.

The secondary battery may further include a fracture notch that is concave from an outer side surface of the clamping part and positioned to face the notch.

A central axis of the fracture notch and a central axis of the notch may be coaxial.

A depth of the fracture notch may be less than a depth of the notch.

The secondary battery may further include a gasket disposed between the clamping part and the cap assembly.

According to another aspect of the present disclosure, a battery pack includes a housing, and a plurality of secondary batteries accommodated inside the housing, wherein each of the secondary batteries includes a case, an electrode assembly accommodated inside the case, a cap assembly facing the electrode assembly, a clamping part surrounding the cap assembly, and a notch that is concave from an inner side surface of the clamping part.

### BRIEF DESCRIPTION OF THE DRAWINGS

The drawings attached to this specification illustrate some embodiments of the present disclosure and further describe aspects and features of the present disclosure together with the detailed description of the present disclosure. However, the present disclosure is not limited to the embodiments depicted in the drawings.
FIG. 1 is a perspective view schematically illustrating a configuration of a secondary battery according to a first embodiment of the present disclosure;
FIG. 2 is a cross-sectional view schematically illustrating a configuration of the secondary battery according to the first embodiment of the present disclosure;
FIG. 3 is an enlarged cross-sectional view schematically illustrating a configuration of a cap assembly according to the first embodiment of the present disclosure;
FIG. 4 is an enlarged cross-sectional view schematically illustrating a configuration of a clamping part according to the first embodiment of the present disclosure;
FIG. 5 is an enlarged cross-sectional view schematically illustrating a configuration of a notch according to the first embodiment of the present disclosure;
FIGS. 6 and 7 are cross-sectional views schematically illustrating an operating process of the secondary battery according to the first embodiment of the present disclosure;
FIG. 8 is a cross-sectional view schematically illustrating a configuration of a cap assembly according to a second embodiment of the present disclosure;
FIG. 9 is an enlarged view schematically illustrating a configuration of a notch according to the second embodiment of the present disclosure;
FIG. 10 is a cross-sectional view schematically illustrating a configuration of a notch according to a third embodiment of the present disclosure;
FIG. 11 is a cross-sectional view schematically illustrating a configuration of a cap assembly according to a fourth embodiment of the present disclosure;
FIG. 12 is an enlarged cross-sectional view schematically illustrating a configuration of a sub-notch according to the fourth embodiment of the present disclosure;
FIGS. 13 and 14 are cross-sectional views schematically illustrating an operating process of the secondary battery according to the fourth embodiment of the present disclosure;
FIG. 15 is a cross-sectional view schematically illustrating a configuration of a cap assembly according to a fifth embodiment of the present disclosure;
FIG. 16 is an enlarged cross-sectional view schematically illustrating a configuration of a fracture notch according to the fifth embodiment of the present disclosure;
FIGS. 17 and 18 are cross-sectional views schematically illustrating an operating process of the secondary battery according to the fifth embodiment of the present disclosure; and
FIG. 19 is a perspective view schematically illustrating a configuration of a battery pack according to various embodiments of the present disclosure.

### DETAILED DESCRIPTION OF EXEMPLARY EMBODIMENTS

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Numerical ranges disclosed and/or recited include all sub-ranges of the same numerical precision subsumed within the recited range. For example, a range of "1.0 to 10.0" includes all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein includes all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

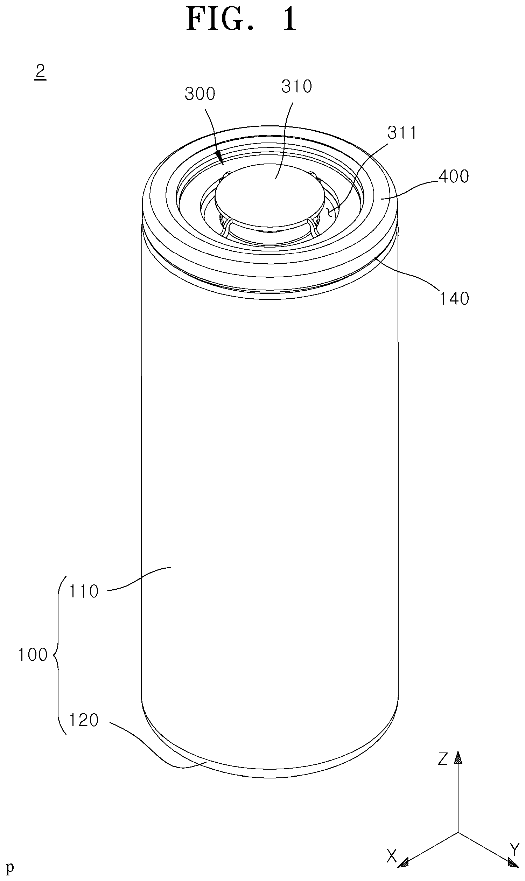

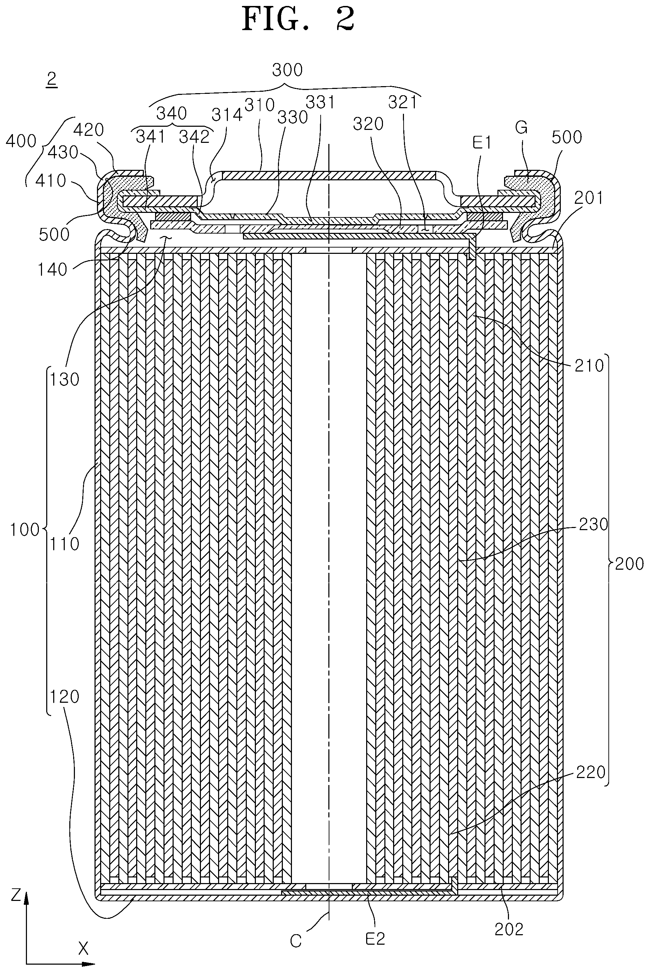

FIG. 1 is a perspective view schematically illustrating a configuration of a secondary battery according to a first embodiment of the present disclosure, and FIG. 2 is a cross-sectional view schematically illustrating a configuration of the secondary battery according to the first embodiment of the present disclosure.

Referring to FIGS. 1 and 2, a secondary battery 2 according to the present embodiment may include a case 100, an electrode assembly 200, a cap assembly 300, a clamping part 400, and a notch 500.

Hereinafter, an embodiment in which the secondary battery 2 is a lithium-ion secondary battery having a cylindrical shape will be described as an example. However, the present disclosure is not limited thereto, and the secondary battery 2 may be, for example, a lithium-polymer battery or a prismatic battery.

The case 100 may form an exterior of the secondary battery 2. The case 100 may be electrically conductive. For example, the case 100 may include at least one material selected from steel, stainless steel, aluminum, and an aluminum alloy. Accordingly, the case 100 can protect the electrode assembly 200 from external impact and perform a heat dissipation function to release heat generated during charging and discharging operations of the electrode assembly 200 to outside of the battery.

The case 100 according to the present embodiment may include a side wall part 110 in the shape of a cylinder with a central axis C formed in a central portion. The central axis C of the case 100 described below and may refer to a central axis of the side wall part 110. The case 100 may be open at both end portions of the side wall part 110 that are perpendicular to the central axis C of the case 100.

The case 100 may further include a bottom part 120 that closes a lower end portion of the side wall part 110. The bottom part 120 according to the present embodiment may be formed to have a substantially disk shape and may be disposed to face the lower end portion of the side wall part 110. The bottom part 120 may be perpendicular to the central axis C of the case 100. A peripheral surface of the bottom part 120 may be coupled to the lower end portion of the side wall part 110. The bottom part 120 may be integrally formed with the side wall part 110 by a drawing process or the like. Alternatively, the bottom part 120 may be fabricated separately from the side wall part 110 and then coupled to the side wall part 110 by welding or the like.

The case 100 may further include an opening 130 adjacent to an upper end portion of the side wall part 110. The opening 130 may allow the electrode assembly 200 (described below) to be inserted into the interior of the case 100. The opening 130 is also a space in which the cap assembly 300 (described below) is installed. The opening 130 according to the present embodiment may refer to an empty space surrounded by an upper end region of the side wall part 110, which is located at a side opposite to the bottom part 120.

The case 100 according to the present embodiment may further include a beading part 140. The beading part 140 may protrude into the inside of the case 100. The beading part 140 may limit the cap assembly 300 from being inserted beyond a set distance into the case 100. The beading part 140 according to the present embodiment may be disposed at the upper end portion of the side wall part 110. A central portion of the beading part 140 may be formed to be concave toward the central axis C. The beading part 140 may be integrally formed with the side wall part 110. Alternatively, the beading part 140 may be fabricated separately from the side wall part 110 and then coupled to the side wall part 110.

Hereinafter, the secondary battery 2 according to the present embodiment will be described by way of example in which the beading part 140 is included. But the present disclosure is not limited to such a configuration. It is also possible for the secondary battery 2 to be configured in a form without the beading part 140.

The electrode assembly 200 may function as a unit structure for performing a power charging and discharging operation in the secondary battery 2. The electrode assembly 200 may include a first electrode plate 210, a second electrode plate 220, and a separator 230 disposed between the first electrode plate 210 and the second electrode plate 220.

The electrode assembly 200 may be disposed inside the case 100. The electrode assembly 200 may be inserted into the case 100 through the opening 130 of the case 100.

The electrode assembly 200 may have a shape that is wound around a winding axis. More specifically, the electrode assembly 200 may have a shape in which the first electrode plate 210, the separator 230, and the second electrode plate 220 are stacked and wound in a clockwise or counterclockwise direction around the winding axis. Accordingly, the electrode assembly 200 may have a shape that is similar to a jelly roll. A cross-sectional shape of the electrode assembly 200 may be varied in design to be an elliptical shape, a polygonal shape, or the like in addition to a circular shape. Here, the winding axis may refer to a straight line passing through a central portion of the electrode assembly 200. The winding axis of the electrode assembly 200 may be disposed coaxially with the central axis C of the case 100.

The first electrode plate 210 may function as a positive electrode of the electrode assembly 200. The first electrode plate 210 may be formed in the form of a foil including a metal material such as aluminum or an aluminum alloy. The type, size, shape, and the like of the first electrode plate 210 are not particularly limited as long as the first electrode plate 210 has conductivity and does not cause chemical changes in the secondary battery.

At least a portion of the first electrode plate 210 may be coated with a first active material layer. More specifically, both surfaces of the first electrode plate 210 may be coated with the first active material layer, or alternatively, only one surface of the first electrode plate 210 may be coated with the first active material.

As the first electrode plate 210 functions as a positive electrode, the first active material layer may include a positive electrode active material. The positive electrode active material may include a compound (lithiated intercalation compound) capable of reversibly intercalating and deintercalating lithium. More specifically, the positive electrode active material may include one or more types of composite oxides of lithium and a metal selected from cobalt, manganese, nickel, iron, and a combination thereof. As examples, the positive electrode active material may include at least one of lithium-iron-phosphate oxide (LiFePO₄, LFP), lithium-manganese-iron-phosphate oxide (LiMnFePO₄, LMFP), and lithium-nickel-cobalt-manganese oxide (LiNiₓCo_{y}MnzO₂, NCM). In these formulas, 0<x<1, 0<y<1, 0<z<1, and x+y+z=1. The positive electrode active material may include only one of LiFePO₄, LiMnFePO₄, and LiNiₓCo_{y}MnzO₂, and may also include two or all of LiFePO₄, LiMnFePO₄, and LiNiₓCo_{y}MnzO₂.

The first active material layer may further include a positive electrode conductive material. The positive electrode conductive material is used to impart conductivity to the first active material layer, and any electrically conductive material that does not cause a chemical change in the battery may be used. Examples of the positive electrode conductive material include a carbon-based material such as natural graphite, artificial graphite, carbon black, acetylene black, ketjen black, carbon fibers, carbon nanofibers, carbon nanotubes, and the like, a metal-based material in the form of a metal powder or metal fiber including copper, nickel, aluminum, silver, and the like, a conductive polymer such as a polyphenylene derivative, or a mixture thereof.

The first active material layer may further include a positive electrode binder. The positive electrode binder serves to adhere particles constituting the positive electrode active material to each other, and to adhere the positive electrode active material to the first electrode plate 210 well.

Examples of the positive electrode binder may include a non-aqueous binder, an aqueous binder, a dry binder, or a combination thereof. The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof. When the aqueous binder is used as the positive electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be used in combination. Na, K, or Li may be used as the alkali metal.

The dry binder is a polymer material capable of being fiberized. The dry binder may be, for example, polytetrafluoroethylene, polyvinylidene fluoride, a polyvinylidene fluoride-hexafluoropropylene copolymer, a polyethylene oxide, or a combination thereof.

The first electrode plate 210 may be electrically connected to the cap assembly 300. As the first electrode plate 210 functions as the positive electrode of the electrode assembly 200, the cap assembly 300 may function as a positive terminal of the secondary battery 2. In some embodiments, the first electrode plate 210 may be electrically connected to the cap assembly 300 by a first electrode tab E1. The first electrode tab E1 according to the present embodiment may include a conductive metal material such as copper, a copper alloy, nickel, or a nickel alloy. The first electrode tab E1 is disposed on an upper side of the electrode assembly 200. End portions of the first electrode tab E1 are connected to the first electrode plate 210 and the cap assembly 300. One end portion of the first electrode tab E1 may be directly connected to the first electrode plate 210 or may be indirectly connected to the first electrode plate 210 through a separate current collector plate (not shown) that is connected to the first electrode plate 210. However, the first electrode plate 210 is not limited to these configurations and may be, for example, directly connected to the cap assembly 300 without the first electrode tab E1.

The second electrode plate 220 may function as a negative electrode of the electrode assembly 200. The second electrode plate 220 may be formed in the form of a foil including a metal material such as copper, a copper alloy, nickel, or a nickel alloy. The second electrode plate 220 may be spaced apart from the first electrode plate 210 and face the first electrode plate 210.

The type, size, shape, and the like of the second electrode plate 220 are not particularly limited as long as the second electrode plate 220 has conductivity and does not cause chemical changes in the secondary battery.

At least a portion of the second electrode plate 220 may be coated with a second active material layer. More specifically, both surfaces of the second electrode plate 220 may be coated with the second active material layer, or alternatively, only one surface of the second electrode plate 220 may be coated with the second active material layer.

As the second electrode plate 220 functions as a negative electrode, the second active material layer may include a negative electrode active material. The negative electrode active material may be a material that reversibly intercalates/deintercalates lithium ions, a lithium metal, a lithium metal alloy, a material capable of doping and dedoping lithium, or a transition metal oxide.

The material capable of reversible intercalation and deintercalation of lithium ions is a carbon-based negative electrode active material, and may include, for example, crystalline carbon, amorphous carbon, or a combination thereof. Examples of the crystalline carbon include graphite such as amorphous, plate-shaped, flake-shaped, spherical-shaped or fiber-shaped natural graphite or artificial graphite. Examples of the amorphous carbon include soft carbon or hard carbon, a mesophase pitch carbide product, calcined coke, and the like.

The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be used as the material capable of doping and dedoping lithium. The Si-based negative electrode active material may include silicon, a silicon-carbon composite, SiOx (x=1 or 2), a Si-Q alloy or a combination thereof. In the Si-Q alloy, Q is selected from an alkali metal, an alkaline-earth metal, a Group 13 element, a Group 14 element (excluding Si), a Group 15 element, a Group 16 element, a transition metal, a rare-earth element, and a combination thereof. The Sn-based negative electrode active material may include Sn, SnO₂, a Sn-based alloy, or a combination thereof.

The silicon-carbon composite may be a composite of silicon and amorphous carbon. According to one embodiment, the silicon-carbon composite may be in the form of silicon particles and amorphous carbon coated on the surfaces of the silicon particles. For example, the silicon-carbon composite may include secondary particles (core) in which silicon primary particles are agglomerated and an amorphous carbon coating layer (shell) located on the surfaces of the secondary particles. The amorphous carbon may also be located between the silicon primary particles, such that, for example, the silicon primary particles are coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si-based negative electrode active material or the Sn-based negative electrode active material may be used by being mixed with a carbon-based negative electrode active material.

The second active material layer may further include a negative electrode conductive material and a negative electrode binder. The negative electrode conductive material is used to impart conductivity to the second active material layer, and any electrically conductive material that does not cause a chemical change in the battery may be used. Examples of the negative electrode conductive material include a carbon-based material such as natural graphite, artificial graphite, carbon black, acetylene black, ketjen black, carbon fibers, carbon nanofibers, carbon nanotubes, and the like, a metal-based material in the form of a metal powder or metal fiber including copper, nickel, aluminum, silver, and the like, a conductive polymer such as a polyphenylene derivative, or a mixture thereof.

The negative electrode binder serves to adhere particles constituting the negative electrode active material to each other, and to adhere the negative electrode active material to the second electrode plate 220 well. Examples of the negative electrode binder may include a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When the aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be used in combination. Na, K, or Li may be used as the alkali metal.

The dry binder is a polymer material capable of being fiberized, and may be, for example, polytetrafluoroethylene, polyvinylidene fluoride, a polyvinylidene fluoride-hexafluoropropylene copolymer, a polyethylene oxide, or a combination thereof.

The second electrode plate 220 may be electrically connected to the case 100. As an example, the second electrode plate 220 may be electrically connected to the case 100 by a second electrode tab E2. As the second electrode plate 220 functions as the negative electrode of the electrode assembly 200, the case 100 may function as a negative electrode terminal of the secondary battery 2. The second electrode tab E2 according to the present embodiment may include a conductive metal material such as copper, a copper alloy, nickel, or a nickel alloy. The second electrode tab E2 is disposed at a lower side of the electrode assembly 200. End portions of the second electrode tab E2 may connected to the second electrode plate 220 and the bottom part 120 of the case 100. One end portion of the second electrode tab E2 may be directly connected to the second electrode plate 220 or may be indirectly connected to the second electrode plate 220 through a separate current collector plate (not shown) connected to the second electrode plate 220. However, the second electrode plate 220 is not limited to such configurations and may, for example, be directly connected to the case 100 without the second electrode tab E2.

The separator 230 may be disposed between the first electrode plate 210 and the second electrode plate 220. The separator 230 may prevent a short circuit between the first electrode plate 210 and the second electrode plate 220 while allowing the movement of lithium ions between the first electrode plate 210 and the second electrode plate 220.

The separator 230 may be made of polyethylene, polypropylene, polyvinylidene fluoride, or a multilayer film of two or more layers thereof, and may also be made of a mixed multilayer film, such as a polyethylene/polypropylene double-layered separator, a polyethylene/polypropylene/polyethylene three-layered separator, and a polypropylene/polyethylene/polypropylene three-layered separator.

The separator 230 may include a porous substrate. A coating layer including an organic material, an inorganic material, or a combination thereof may be provided on one or both surfaces of the porous substrate.

The porous substrate may be a polymer film formed of a polymer, or a copolymer or mixture of two or more selected from polyolefins such as polyethylene, polypropylene, and the like, polyesters such as polyethylene terephthalate, polybutylene terephthalate, and the like, polyacetal, polyamide, polyimide, polycarbonate, polyetheretherketone, polyaryletherketone, polyetherimide, polyamideimide, polybenzimidazole, polyether sulfone, a polyphenylene oxide, a cyclic olefin copolymer, polyphenylene sulfide, polyethylene naphthalate, glass fibers, TEFLON ^{®}, and polytetrafluoroethylene.

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited to these examples.

The organic and inorganic materials may be present by being mixed in one coating layer or may be present in the form in which a coating layer including organic materials and a coating layer including inorganic materials are stacked.

A pair of separators 230 may be provided. The pair of separators 230 may be disposed to face surfaces of the first electrode plate 210 or the second electrode plate 220. The pair of separators 230 may be wound around the winding axis together with the first electrode plate 210 and the second electrode plate 220.

A first insulating plate 201 and a second insulating plate 202 may be disposed at ends of the electrode assembly 200. The first insulating plate 201 and the second insulating plate 202 may each include insulating materials such as rubber, polyethylene (PE), polypropylene (PP), polyethylene terephthalate (PET), and the like.

The first insulating plate 201 according to the present embodiment may be formed to have a substantially disk shape. The first insulating plate 201 may be disposed between the cap assembly 300 and an upper surface of the electrode assembly 200. Accordingly, the first insulating plate 201 may block the upper surface of the electrode assembly 200 from directly contacting the cap assembly 300 and insulate the electrode assembly 200 and the cap assembly 300 from each other. A through hole (not shown) may be formed in the first insulating plate 201, and the first electrode tab E1 may extend through the through hole.

The second insulating plate 202 according to the present embodiment may be formed to have a substantially disk shape. The second insulating plate 202 may be disposed between a lower surface of the electrode assembly 200 and the bottom part 120 of the case 100. Accordingly, the second insulating plate 202 may block the lower surface of the electrode assembly 200 from directly contacting the bottom part 120 of the case 100 and insulate the electrode assembly 200 and the bottom part 120 of the case 100 from each other. A through hole (not shown) may be formed in the second insulating plate 202, with the second electrode tab E2 passing through the through hole.

The cap assembly 300 may be disposed to face the electrode assembly 200 and may seal the case 100. For example, the cap assembly 300 may be disposed at the upper end portion of the side wall part 110 at the opening 130. The cap assembly 300 may be disposed to face the electrode assembly 200 in a first direction. In the present embodiment, the first direction refers to a direction parallel to the central axis C of the case 100, i.e., the Z-axis direction shown in FIGS. 1 and 2, and extends from the electrode assembly 200 toward the cap assembly 300.

The cap assembly 300 may be electrically connected to the first electrode plate 210 by the first electrode tab E1. As the first electrode plate 210 functions as the positive electrode of the electrode assembly 200, the cap assembly 300 may function as a positive terminal of the secondary battery.

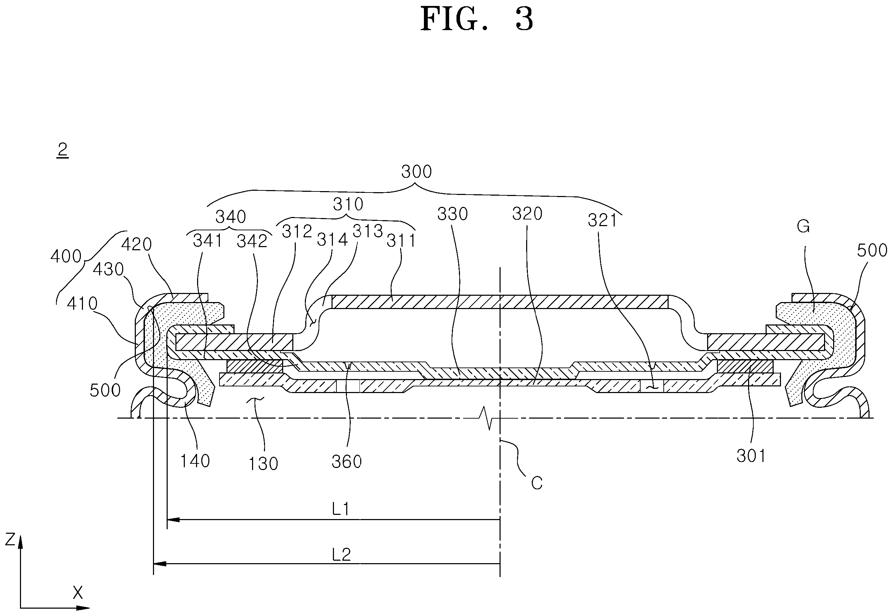

FIG. 3 is an enlarged cross-sectional view schematically illustrating a configuration of a cap assembly according to the first embodiment of the present disclosure.

Referring to FIGS. 1 to 3, the cap assembly 300 according to the present embodiment may include a upper cap 310, a lower cap 320, a vent plate 330, and an extension part 340.

The upper cap 310 may form the exterior of an upper side of the cap assembly 300. The upper cap 310 may be electrically connected to the first electrode plate 210 by the lower cap 320 and the vent plate 330. A central axis of the upper cap 310 may be coaxially aligned with the central axis C of the case 100. A central portion of the upper cap 310 may protrude to outside of the case 100. The upper cap 310 may be made of an electrically conductive material such as nickel, aluminum, copper, and the like.

The upper cap 310 according to the present embodiment may include a small-diameter part 311, a large-diameter part 312, and a bridge 313.

The small-diameter part 311 and the large-diameter part 312 may have the form of disks with different diameters. A diameter of the small-diameter part 311 may be less than a diameter of the large-diameter part 312. Central axes of the small-diameter part 311 and the large-diameter part 312 may be disposed coaxially with the central axis C of the case 100. The small-diameter part 311 and the large-diameter part 312 may be disposed to face each other in the first direction. As shown in FIG. 3, the small-diameter part 311 may be disposed above the large-diameter part 312. The small-diameter part 311 may protrude to outside of the case 100. The large-diameter part 312 may have the shape of a ring with a hollow portion formed in a central portion.

The bridge 313 may be disposed between the small-diameter part 311 and the large-diameter part 312. End portions of the bridge 313 may be connected to an outer peripheral surface of the small-diameter part 311 and an outer peripheral surface of the large-diameter part 312. The bridge 313 may have the form of a curved surface extending from the small-diameter part 311 toward the large-diameter part 312.

An upper cap hole 314 may be formed in the upper cap 310 to discharge gases generated inside the case 100 to outside of the case 100. The upper cap hole 314 according to the present embodiment may have the form of a hole passing through the bridge 313 of the upper cap 310. A plurality of upper cap holes 314 may be provided. The plurality of upper cap holes 314 may be arranged at predetermined intervals along a peripheral surface of the central portion of the upper cap 310.

The lower cap 320 is disposed to face the upper cap 310 and may be electrically connected to the electrode assembly 200. The lower cap 320 according to the present embodiment may be formed to have a substantially disk shape. The lower cap 320 may be disposed inside the case 100 and below the upper cap 310. That is, the lower cap 320 may be disposed between the upper cap 310 and the electrode assembly 200. A central axis of the lower cap 320 may be coaxial with the central axis C of the case 100. An upper surface of the lower cap 320 may be spaced apart from a lower surface of the upper cap 310.

A surface area of the lower cap 320 may be less than a cross-sectional area of the electrode assembly 200 in a direction perpendicular to the central axis C of the case 100. However, the surface area of the lower cap 320 is not limited in this regard and may be the same as the cross-sectional area of the electrode assembly 200 or may be greater than the cross-sectional area of the electrode assembly 200.

The lower cap 320 may be made of an electrically conductive material such as nickel, aluminum, copper, and the like. The lower cap 320 may be electrically connected to the electrode assembly 200. As an example, an end portion of the first electrode tab E1 extending from the first electrode plate 210 may be connected to a lower side surface of the lower cap 320 by various types of coupling methods such as welding. The lower cap 320 may be electrically connected to the upper cap 310 by the vent plate 330.

A lower cap hole 321, which vertically passes through the lower cap 320, may be formed in the lower cap 320. The lower cap hole 321 may provide a path through which gases generated inside the case 100 pass through the lower cap 320 when an abnormality, such as an overcurrent, occurs. A plurality of lower cap holes 321 may be provided. The plurality of lower cap holes 321 may be arranged along a circumference that is centered on the central axis of the lower cap 320.

The vent plate 330 may be disposed between the upper cap 310 and the lower cap 320. The vent plate 330 may provide an electrical conduction path between the upper cap 310 and the lower cap 320 during normal operation of the secondary battery 2. The vent plate 330 may be made of an electrically conductive material such as nickel, aluminum, copper, and the like

When an overcurrent occurs, the vent plate 330 may be deformed by a pressure of the gas generated inside the case 100 and may cut off the electrical connection between the upper cap 310 and the lower cap 320. The vent plate 330 may rupture when the internal pressure of the case 100 becomes greater than a set level, thereby opening a path between the upper cap hole 314 and the lower cap hole 321 for gases to be discharged.

The vent plate 330 according to the present embodiment may have a substantially disk shape. The vent plate 330 may be disposed such that its upper and lower surfaces thereof face the upper cap 310 and the lower cap 320. The lower surface of the vent plate 330 may be disposed to face the lower cap hole 321. A central axis of the vent plate 330 may be coaxial with the central axis C of the case 100.

The vent plate 330 may include a contact part 331. The contact part 331 according to the present embodiment may protrude from the vent plate 330 toward the lower cap 320 and be in contact with the lower cap 320. The contact part 331 may function to electrically connect the vent plate 330 and the lower cap 320. Accordingly, current generated from the first electrode plate 210 may be transmitted to the upper cap 310 sequentially through the first electrode tab E1, the lower cap 320, the vent plate 330, and the extension part 340. The contact part 331 may be disposed in a central portion of the vent plate 330. A central axis of the contact part 331 may be coaxial with the central axis C of the case 100.

When the vent plate 330 is deformed due to an increase in the internal pressure of the case 100, the contact part 331 may be separated from the lower cap 320. Accordingly, when an abnormality such as an overcurrent occurs, the electrical connection between the lower cap 320 and the vent plate 330 may be cut off.

An insulator 301 may be disposed between the vent plate 330 and the lower cap 320. The insulator 301 may prevent the vent plate 330, excluding the contact part 331, from coming into direct contact with the lower cap 320. Accordingly, the insulator 301 may ensure that the electrical connection between the vent plate 330 and the lower cap 320 is only through the contact part 331.

The insulator 301 according to the present embodiment may be formed in a ring shape. A central axis of the insulator 301 may be coaxially aligned with the central axis C of the case 100 and the central axis of the vent plate 330. An upper surface of the insulator 301 may be in contact with a lower surface of the vent plate 330, and a lower surface of the insulator 301 may be in contact with the upper surface of the lower cap 320. The insulator 301 may be formed of insulating materials such as rubber, polyethylene (PE), polypropylene (PP), polyethylene terephthalate (PET), and the like.

The extension part 340 that extends from the vent plate 330 may be connected to the upper cap 310. The extension part 340 may support the vent plate 330 with respect to the upper cap 310 and provides an electrical connection between the upper cap 310 and the vent plate 330. The extension part 340 may be formed of the same material as the vent plate 330. The extension part 340 may be integrally formed with the vent plate 330Alternatively, the extension part 340 may be fabricated separately from the vent plate 330 and then coupled to the vent plate 330.

The extension part 340 according to the present embodiment may include a support part 341 and a hinge part 342.

The support part 341 forms the exterior of one side of the extension part 340 and may be connected to the upper cap 310. The support part 341 according to the present embodiment may be disposed to surround an end portion of the upper cap 310, more specifically, surround an edge region of the large-diameter part 312. In some embodiments, the support part 341 may have a substantially U-shaped cross-section. One end portion of the support part 341 may be in contact with an upper surface of the large-diameter part 312 and the other end portion of the support part 341 may be bent downward to be in contact with a lower surface of the large-diameter part 312. The support part 341 may be coupled to the upper cap 310 by various types of coupling methods such as laser welding, ultrasonic welding, and resistance welding.

The support part 341 may face the beading part 140 in the first direction. As an example, the support part 341 may be disposed above the beading part 140. Accordingly, during assembly of the secondary battery 2, the beading part 140 may limit the cap assembly 300 from being inserted beyond a set distance into the case 100.

The hinge part 342 forms the exterior of the other side of the extension part 340 and may be disposed between the support part 341 and the vent plate 330. The hinge part 342 may connect the support part 341 and the vent plate 330 to each other and guide the deformation of the vent plate 330 when the internal pressure of the case 100 increases.

The hinge part 342 according to the present embodiment has a substantially circular ring shape and may be disposed between the support part 341 and the vent plate 330. An inner peripheral surface of the hinge part 342 may be connected to the vent plate 330, and an outer peripheral surface of the hinge part 342 may be connected to the other end portion of the support part 341. The hinge part 342 may extend downward in a stepped manner from the outer peripheral surface toward the inner peripheral surface. In some embodiments, a central portion of the hinge part 342 may have a cross section bent in an L-shape.

When an abnormality such as an overcurrent occurs, the vent plate 330 may be deformed relative to the hinge part 342. For example, when the internal pressure of the case 100 increases due to an overcurrent, gases passing through the lower cap hole 321 press the vent plate 330 upward, and the vent plate 330 may be deformed into a shape in which the central portion thereof protrudes convexly upward due to a change in a bent angle of the hinge part 342.

The secondary battery 2 according to the present embodiment may further include a vent notch 360. The vent notch 360 may be formed to be concave from an outer side surface of the vent plate 330. The vent notch 360 may function to guide the rupture of the vent plate 330 when the internal pressure of the case 100 increases to greater than a set level.

The vent notch 360 according to the present embodiment may have the shape of a groove that is concavely recessed downward from an upper surface of the vent plate 330. The vent notch 360 may be formed such that a cross-sectional area thereof gradually narrows as it extends downward. The vent notch 360 may be ring shaped along a circular arc centered on the central axis C of the case 100.

The clamping part 400 may extend from the case 100 and may be disposed to surround the cap assembly 300. The clamping part 400 may fixe the position of the cap assembly 300 and prevent the cap assembly 300 from detaching from the case 100. The clamping part 400 may be integrally formed with the case 100. Alternatively, the clamping part 400 may be fabricated separately from the case 100 and then coupled to the case 100. The material of the clamping part 400 may be the same as that of the case 100.

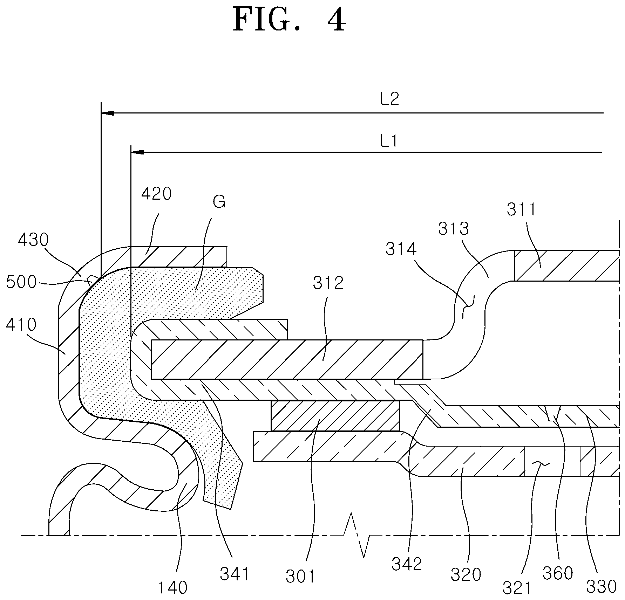

FIG. 4 is an enlarged cross-sectional view schematically illustrating a configuration of the clamping part according to the first embodiment of the present disclosure.

Referring to FIGS. 1 to 4, the clamping part 400 according to the present embodiment may include a first clamping body 410, a second clamping body 420, and a bent part 430.

The first clamping body 410 may extend from the case 100 and form the exterior of one side of the clamping part 400. The first clamping body 410 according to the present embodiment may extend from an upper end portion of the beading part 140. The first clamping body 410 may be parallel to the first direction. The first clamping body 410 may surround a peripheral surface of the cap assembly 300, more specifically, an outer peripheral surface of the support part 341.

The second clamping body 420 is spaced apart from the first clamping body 410 and may form the exterior of the other side of the clamping part 400. The second clamping body 420 may intersect the first clamping body 410 and face the cap assembly 300 in the first direction.

The second clamping body 420 according to the present embodiment may be disposed above the support part 341. As such, a lower surface of the second clamping body 420 may be disposed to face an upper surface of the support part 341. The second clamping body 420 may be disposed perpendicular to the first direction. The second clamping body 420 may be ring shaped with a hollow a central portion. A central axis of the second clamping body 420 may be coaxial with the central axis C of the case 100.

The bent part 430 may be disposed between the first clamping body 410 and the second clamping body 420. The bent part 430 may mechanically connect the first clamping body 410 and the second clamping body 420.

End portions of the bent part 430 according to the present embodiment may be connected to an upper end portion of the first clamping body 410 and an outer peripheral surface of the second clamping body 420. The bent part 430 may have a rounded arc-shaped cross-section with a predetermined curvature. The curvature of the bent part 430 may be design based on positions of the first clamping body 410 and the second clamping body 420, a separation distance between the first clamping body 410 and the second clamping body 420, and the like. A convex side of the bent part 430 may be disposed to face outside of the secondary battery 2.

The secondary battery 2 according to the present embodiment may further include a gasket G disposed between the clamping part 400 and the cap assembly 300. The gasket G may electrically insulate the case 100 and the cap assembly 300 from each other and prevents the flow of moisture or electrolyte in or out between the case 100 and the cap assembly 300.

The gasket G according to the present embodiment may include insulating materials such as rubber, polyethylene (PE), polypropylene (PP), polyethylene terephthalate (PET), and the like. The gasket G may be formed in a ring shape. The gasket G may have a U-shaped cross-section. An upper portion of an outer side surface of the gasket G may be in contact with inner side surfaces of the first clamping body 410, the bent part 430, and the second clamping body 420. A lower portion of the outer side surface of the gasket G may be in contact with an upper side surface of the beading part 140. An inner side surface of the gasket G may surround and be in contact with an outer side surface of the support part 341. A lower surface of the support part 341 may be supported against the upper side surface of the beading part 140 by the gasket G.

The second clamping body 420 may compress the gasket G in a direction parallel to the first direction, and may press the support part 341 in the opposite direction of the first direction by a rigidity thereof and an elastic restoring force of the gasket G.

The notch 500 may be configured to reduce a thickness of a partial section of the clamping part 400. The notch 500 may function to induce deformation of the clamping part 400 when the internal pressure of the case 100 increases. Accordingly, in the event of an abnormality such as ignition or thermal runaway of the secondary battery 2, the cap assembly 300 may be detached from the case 100, and explosion or damage to the case 100 may be prevented.

The notch 500 may be disposed on an inner side surface of the clamping part 400, which faces the cap assembly 300. Accordingly, in the secondary battery 2 according to the present embodiment, the notch 500 may be prevented from being damaged by external moisture, foreign substances, and the like. In addition, in the secondary battery 2 according to the present embodiment, the cap assembly 300 may be more smoothly detached by an increased range of deformation of the clamping part 400 as compared to a case where the notch 500 is formed on an outer side surface of the clamping part 400.

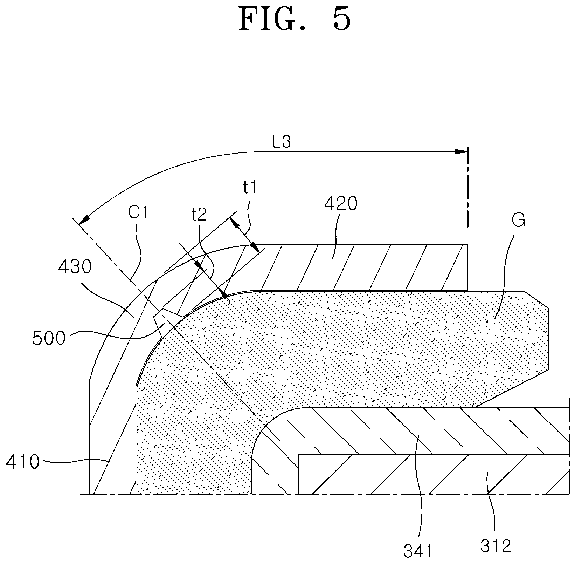

FIG. 5 is an enlarged cross-sectional view schematically illustrating a configuration of a notch according to the first embodiment of the present disclosure.

Referring to FIGS. 1 to 5, the notch 500 according to the present embodiment may have the shape of a groove formed to be concave from an inner side surface of the bent part 430. The notch 500 may be narrower in width as it extends from the inner side surface of the bent part 430 toward an outer side surface of the bent part 430. As an example, the notch 500 may have a substantially trapezoidal cross-sectional shape. The notch 500 may have a ring shape extending along a circular arc centered on the central axis C of the case 100.

As shown in FIGS. 3 and 4, a distance L1 from the central axis C of the case 100 to an end portion of the cap assembly 300 may be less than a distance L2 from the central axis C of the case 100 to the notch 500. The distance L1 from the central axis C of the case 100 to the end portion of the cap assembly 300 may refer to a distance from the central axis C of the case 100 to the outer peripheral surface of the support part 341. Further, the distance L2 from the central axis C of the case 100 to the notch 500 may refer to a minimum distance from the central axis C of the case 100 to a region in which the notch 500 is formed. Accordingly, the notch 500 may prevent the clamping part 400 from interfering with the cap assembly 300 while the cap assembly 300 moves due to the internal pressure of the case 100 by positioning a deformation reference point of the clamping part 400 outside the cap assembly 300.

As the notch 500 is formed in the bent part 430, a central axis C1 of the notch 500 may be disposed to be inclined with respect to the central axis of the case 100. An angle θ between the central axis C of the case 100 and the central axis C1 of the notch 500 may be greater than or equal to 30° and less than or equal to 45°. As an example, the angle between the central axis C of the case 100 and the central axis C1 of the notch 500 may be 34°.

A length L3 from an end portion of the second clamping body 420 to the notch 500 may be greater than or equal to 1.4 mm and less than or equal to 3 mm. As an example, the length from the end portion of the second clamping body 420 to the notch 500 may be 2 mm. Here, the end portion of the second clamping body 420 may refer to an inner peripheral surface of the second clamping body 420 that faces the central axis of the case 100. The length L3 from the end portion of the second clamping body 420 to the notch 500 may be the sum of a straight length of the second clamping body 420 perpendicular to the first direction and a curved length from the second clamping body 420 to the notch 500.

When the angle θ between the central axis C of the case 100 and the central axis C1 of the notch 500 is less than 30°, or when the length from the end portion of the second clamping body 420 to the notch 500 is less than 1.4 mm, the length by which the clamping part 400 deforms may become excessively short, thereby causing the clamping part 400 to interfere with the cap assembly 300 when the cap assembly 300 moves due to the internal pressure of the case 100. When the angle θ between the central axis C of the case 100 and the central axis C1 of the notch 500 is greater than 45°, or when the length from the end portion of the second clamping body 420 to the notch 500 is greater than 3 mm, the length by which the clamping part 400 deforms and the magnitude the internal pressure of the case 100 required for the deformation of the clamping part 400 may be excessive, which may result in the clamping part 400 not smoothly deforming in the event of ignition or thermal runaway of the secondary battery 2.

A ratio t2/t1 of a depth t2 of the notch 500 to a thickness t1 of the bent part 430 may be greater than or equal to 0.5 and less than or equal to 0.9. For example, when the thickness t1 of the bent part 430 is 0.3 mm, the depth t2 of the notch 500 may be greater than or equal to 0.15 mm and less than or equal to 0.27 mm. When the ratio t2/t1 of the depth t2 of the notch 500 to the thickness t1 of the bent part 430 is greater than 0.9, the strength of the clamping part 400 in the region in which the notch 500 is formed may be too weak and the cap assembly 300 may not be reliably fixed.

When the ratio t2/t1 of the depth t2 of the notch 500 to the thickness t1 of the bent part 430 is less than 0.5, the clamping part 400 may not deform smoothly in the event of ignition or thermal runaway of the secondary battery 2, and the cap assembly 300 may not detach from the case.

Experimental results of measuring a deformation pressure of the clamping part 400 by varying the ratio t2/t1 of the depth t2 of the notch 500 to the thickness t1 of the bent part 430, with the thickness t1 of the bent part 430 set at 0.3mm, are shown in Table 1.

**[Table 1]**

| t1 (mm) | t2 (mm) | t2/t1 | Deformation pressure (kgf/cm²) |
|---|---|---|---|
| 0.3 | 0 | 0 | 70 |
| 0.3 | 0.05 | 0.167 | 63 |
| 0.3 | 0.1 | 0.34 | 58 |
| 0.3 | 0.15 | 0.5 | 50 |
| 0.3 | 0.22 | 0.67 | 30 |

For the results shown in Table 1, the deformation pressure of the clamping part 400 was measured at 90 °C, which is the temperature at which an exothermic reaction of the electrode assembly 200 begins. The internal pressure of the case 100 at 90 °C was measured to be 50 kgf/cm².

Referring to Table 1, it can be seen that when the ratio t2/t1 of the depth t2 of the notch 500 to the thickness t1 of the bent part 430 is less than 0.5, the deformation pressure of the clamping part 400 is greater than the internal pressure of the case 100. The clamping part 400 therefore does not deform smoothly when there is an abnormality such as ignition or thermal runaway of the secondary battery 2.

Hereinafter, an operation of the secondary battery 2 according to the first embodiment of the present disclosure will be described.

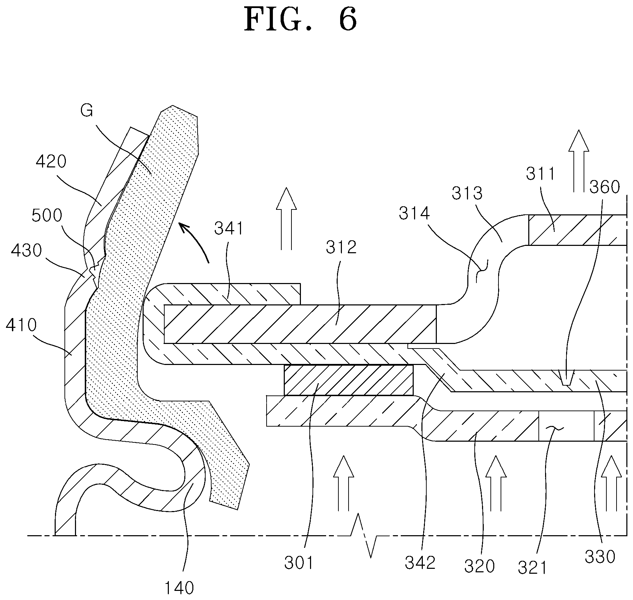

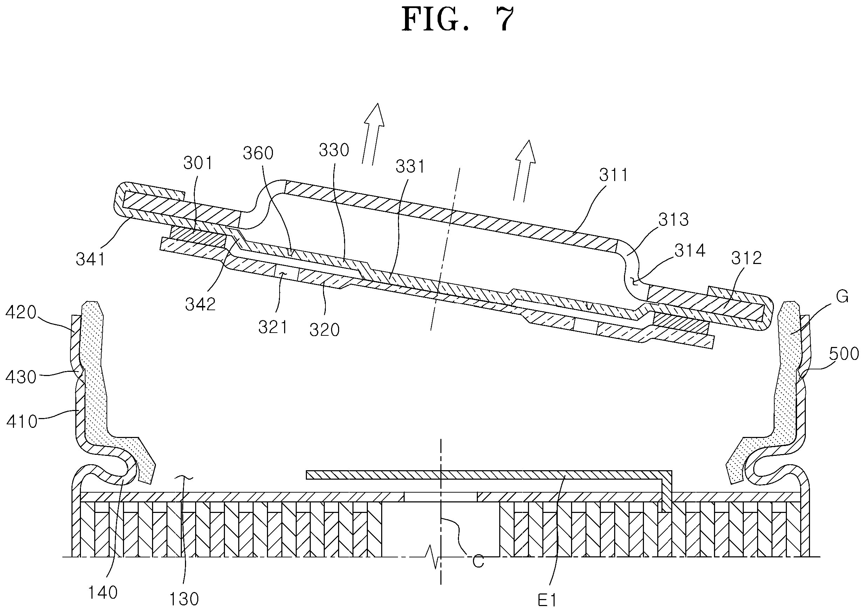

FIGS. 6 and 7 are views schematically illustrating an operating process of the secondary battery according to the first embodiment of the present disclosure.

Referring to FIGS. 1 to 7, when the internal pressure of the case 100 increases due to the exothermic reaction of the electrode assembly 200, a pressing force is applied to the cap assembly 300 in the first direction (i.e., upward). The pressure applied to the cap assembly 300 is transmitted to the clamping part 400 through the gasket G.

When the pressure applied to the cap assembly 300 exceeds a set pressure, a partial region of the clamping part 400 extending from the second clamping body 420 to the notch 500 is deformed relative to the notch 500. More specifically, both sides of the bent part 430 are spread apart relative to the central axis C1 of the notch 500, and the second clamping body 420 and a partial region of the bent part 430 located on one side of the notch 500 are moved in a direction away from the central axis C of the case 100. The deformation of the clamping part 400 continues until the point when the distance from the central axis C of the case 100 to the end portion of the second clamping body 420 exceeds the distance from the central axis C of the case 100 to the end portion of the cap assembly 300.

Thereafter, the cap assembly 300 is moved in the first direction (upward), separated from the clamping part 400 and gasket G, and detached from the case 100, thereby opening the opening 130. Accordingly, gases or the like generated inside the case 100 may be discharged to outside of the case 100 through the opening 130, and the internal pressure of the case 100 may be reduced.

Hereinafter, a secondary battery 2 according to a second embodiment of the present disclosure will be described.

The secondary battery 2 according to the present embodiment may be configured to be different only with respect to the configuration of the notch 500 as compared to the secondary battery 2 according to the first embodiment of the present disclosure. Accordingly, in describing the secondary battery 2 according to the present embodiment, only the detailed configuration of the notch 500 will be described. For the other components of the secondary battery 2 according to the present embodiment, the above description of the secondary battery 2 according to the first embodiment of the present disclosure may be applied.

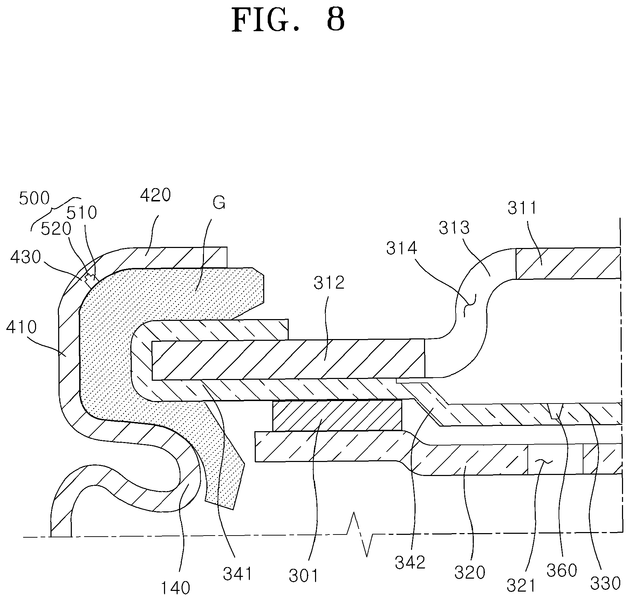

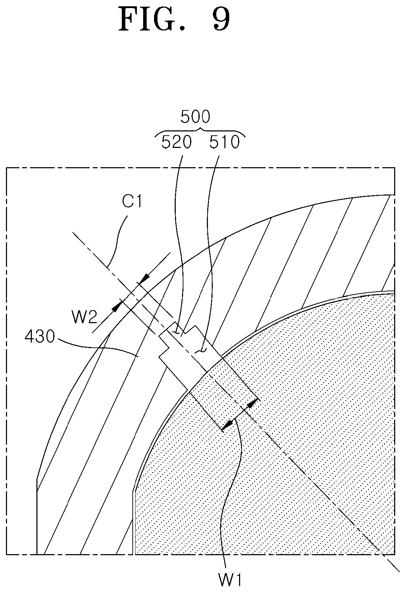

FIG. 8 is a cross-sectional view schematically illustrating a configuration of a cap assembly according to the second embodiment of the present disclosure, and FIG. 9 is an enlarged view schematically illustrating a configuration of the notch according to the second embodiment of the present disclosure.

Referring to FIGS. 8 and 9, the notch 500 according to the present embodiment may include a first recess 510 and a second recess 520. The first recess 510 according to the present embodiment is a region on one side of the notch 500 that passes through the inner side surface of the bent part 430. The second recess 520 according to the present embodiment is a region on the other side of the notch 500 that extends from the first recess 510 toward the outer side surface of the bent part 430. The second recess 520 may be connected to the first recess 510. That is, the first recess 510 and the second recess 520 may have the shape of a groove that extends continuously along the central axis C1 of the notch 500 from the inner side surface of the bent part 430 toward the outer side surface of the bent part 430.

The sum of depths of the first recess 510 and the second recess 520 may be equal to the depth t2 of the notch 500 described in the first embodiment of the present disclosure.

A width W2 of the second recess 520 may be less than a width W1 of the first recess 510. That is, the notch 500 according to the present embodiment may have a cross-sectional shape that varies in width.

Hereinafter, a secondary battery 2 according to a third embodiment of the present disclosure will be described.

The secondary battery 2 according to the present embodiment is different only with respect to the configuration of a notch 500 from the secondary battery 2 according to the first embodiment of the present disclosure. Accordingly, in describing the secondary battery 2 according to the present embodiment, only the detailed configuration of the notch 500 will be described. For the other components of the secondary battery 2 according to the present embodiment, the above description of the secondary battery 2 according to the first embodiment of the present disclosure may be applied.

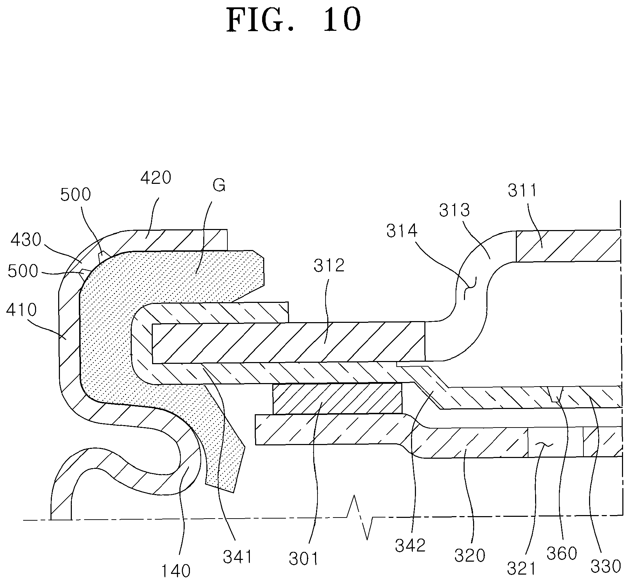

FIG. 10 is a cross-sectional view schematically illustrating a configuration of the notch according to the third embodiment of the present disclosure.

Referring to FIG. 10, the notch 500 according to the present embodiment is provided as a plurality of notches 500. The plurality of notches 500 may be arranged in a direction that the bent part 430 extends. In FIG. 10, two notches 500 are shown as an example, but the number of notches 500 is not limited, and may be changed in design to include three, four, or more notches. With the plurality of notches, a deformation angle of the clamping part 400 may be increased, thereby allowing the cap assembly 300 to detach more smoothly when the internal pressure of the case 100 increases.

In the present embodiment, the positions, depths, or the like of the plurality of notches 500 may be within ranges that they satisfy the conditions for of the notch 500 according to the first embodiment of the present disclosure. Also in the present embodiment, the cross-sectional shapes, depths, or the like of the notches 500 may be identical to each other, or may be formed differently.

Hereinafter, a secondary battery 2 according to a fourth embodiment of the present disclosure will be described.

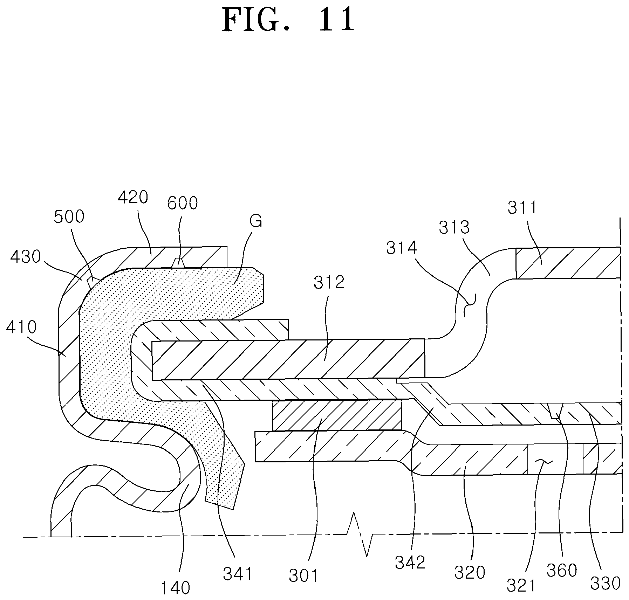

FIG. 11 is a cross-sectional view schematically illustrating a configuration of a cap assembly according to the fourth embodiment of the present disclosure.

Referring to FIG. 11, the secondary battery 2 according to the present embodiment may further include a sub-notch 600. The secondary battery 2 according to the present embodiment may be configured to be different from the secondary battery 2 according to the first embodiment of the present disclosure only in that the sub-notch 600 is included. Accordingly, in describing the secondary battery 2 according to the present embodiment, only the sub-notch 600 that is not described in the secondary battery 2 according to the first embodiment of the present disclosure will be described. For the other components of the secondary battery 2 according to the present embodiment, the above description of the secondary battery 2 according to the first embodiment of the present disclosure may be applied.

The sub-notch 600 may be spaced apart from the notch 500 and disposed on the second clamping body 420. The sub-notch 600, together with the notch 500, may function to induce sequential deformation of the clamping part 400 when the internal pressure of the case 100 increases. Accordingly, in the secondary battery according to the present embodiment, the amount of deformation of the clamping part 400 may be distributed across different locations by the notch 500 and the sub-notch 600, thereby preventing the clamping part 400 from fracturing during the detachment of the cap assembly 300 and preventing damage to adjacent components caused by the fracture of the clamping part 400.

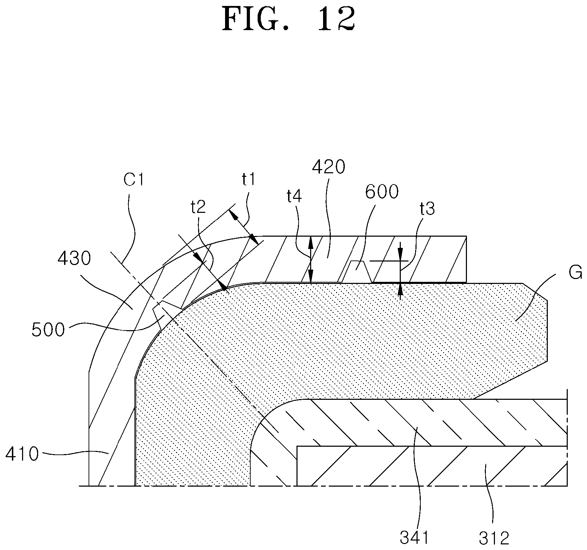

FIG. 12 is an enlarged cross-sectional view schematically illustrating a configuration of the sub-notch according to the fourth embodiment of the present disclosure.

Referring to FIGS. 11 and 12, the sub-notch 600 according to the present embodiment may have the shape of a groove formed to be concave from the inner side surface of the second clamping body 420, which faces the upper surface of the support part 341 and the gasket G. As the second clamping body 420 is perpendicular to the first direction, the sub-notch 600 may extend in the first direction from the inner side surface of the second clamping body 420. The sub-notch 600 may be narrower in width as it extends toward an outer side surface of the second clamping body 420.

A depth t3 of the sub-notch 600 may be less than the depth t2 of the notch 500. Accordingly, the sub-notch 600 may induce the clamping part 400 to preferentially deform in the region in which the notch 500 is formed when the internal pressure of the case 100 increases. A ratio of the depth t3 of the sub-notch 600 to a thickness t4 of the second clamping body 420 may be greater than or equal to 0.5 and less than or equal to 0.9. The thickness of the second clamping body 420 may be the same as the thickness t1 of the bent part 430 or may be different from the thickness t1 of the bent part 430.

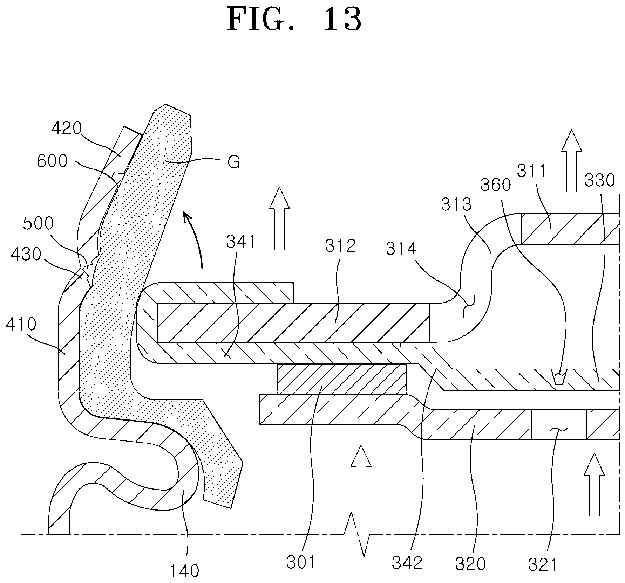

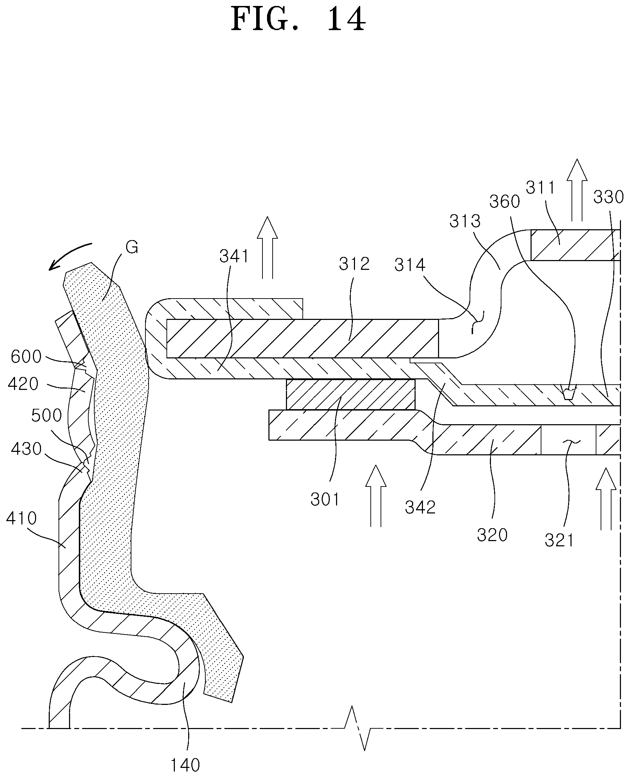

Hereinafter, an operation of the secondary battery according to the fourth embodiment of the present disclosure will be described. FIGS. 13 and 14 are cross-sectional views schematically illustrating an operating process of the secondary battery according to the fourth embodiment of the present disclosure.

Referring to FIGS. 11 to 14, when the internal pressure of the case 100 increases due to the exothermic reaction of the electrode assembly 200, a pressing force is applied to the cap assembly 300 in the first direction.

The pressure applied to the cap assembly 300 is transmitted to the clamping part 400 through the gasket G.

When the pressure applied to the cap assembly 300 exceeds a set pressure, a partial region of the clamping part 400 extending from the second clamping body 420 to the notch 500 is deformed relative to the notch 500. More specifically, as the depth t3 of the sub-notch 600 is formed to be less than the depth t2 of the notch 500, both sides of the bent part 430 are initially spread apart. Accordingly, the second clamping body 420 and a partial region of the bent part 430 located on one side of the notch 500 are moved in a direction away from the central axis C of the case 100.

The deformation of the clamping part 400 continues until the point when the distance from the central axis C of the case 100 to the sub-notch 600 exceeds the distance from the central axis C of the case 100 to the end portion of the cap assembly 300. Thereafter, as the cap assembly 300 continues to move in the first direction (i.e., upward), both sides of the bent part 430 are secondarily spread apart relative to a central axis C2 of the sub-notch 600. Accordingly, a partial region of the second clamping body 420 located on one side of the sub-notch 600 is moved in a direction away from the central axis C of the case 100.

Thereafter, the cap assembly 300 is moved in the first direction, separated from the clamping part 400 and gasket G, and detached from the case 100, thereby opening the opening 130. Accordingly, gases or the like generated inside the case 100 may be discharged to outside of the case 100 through the opening 130, and the internal pressure of the case 100 may be reduced.

Hereinafter, a secondary battery 2 according to a fifth embodiment of the present disclosure will be described.

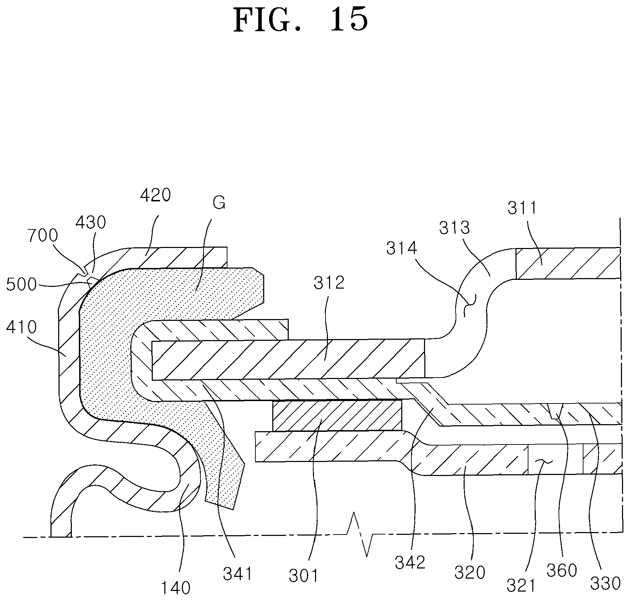

FIG. 15 is a cross-sectional view schematically illustrating a configuration of a cap assembly according to the fifth embodiment of the present disclosure.

Referring to FIG. 15, the secondary battery 2 according to the present embodiment may further include a fracture notch 700.

The secondary battery 2 according to the present embodiment may be configured to be different from the secondary battery 2 according to the first embodiment of the present disclosure only in that the fracture notch 700 is included. Accordingly, in describing the secondary battery 2 according to the present embodiment, only the fracture notch 700 will be described. For the other components of the secondary battery 2 according to the present embodiment, the above description of the secondary battery 2 according to the first embodiment of the present disclosure may be applied.

The fracture notch 700 may be formed to be concave from the outer side surface of the clamping part 400. The fracture notch 700 may be disposed to face the notch 500. The fracture notch 700 may function to induce the clamping part 400 to completely fracture relative to the notch 500 when the clamping part 400 deforms. Accordingly, in the secondary battery 2 according to the present embodiment, the cap assembly 300 can be detached more quickly when the internal pressure of the case 100 increases.

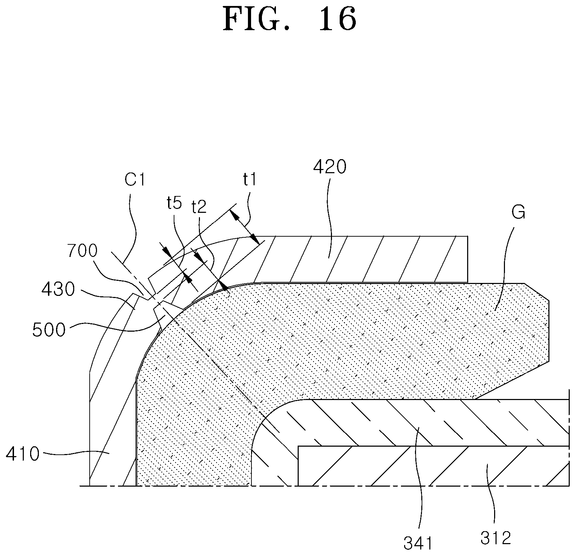

FIG. 16 is an enlarged cross-sectional view schematically illustrating a configuration of the fracture notch according to the fifth embodiment of the present disclosure.

Referring to FIGS. 15 and 16, the fracture notch 700 according to the present embodiment may have the shape of a groove formed to be concave from the outer side surface of the bent part 430 toward the inner side surface of the bent part 430. A direction that the fracture notch 700 extends may be parallel to a direction that the notch 500 extends.

A central axis of the fracture notch 700 may be coaxial with the central axis C1 of the notch 500. Accordingly, the fracture notch 700 may ensure that fracturing the clamping part 400 occurs when the clamping part 400 deforms.

A depth t5 of the fracture notch 700 may be less than the depth t2 of the notch 500. A ratio of the sum of the depth t5 of the fracture notch 700 and the depth t2 of the notch 500 to the thickness t1 of the bent part 430 may be within a range of 0.5 to 0.9.

In FIG. 16, a cross-sectional shape of the fracture notch 700 is illustrated as an arc shape. But the cross-sectional shape of the fracture notch 700 is not limited to such a shape and may be changed to various other shapes.

Hereinafter, an operation of the secondary battery 2 according to the fifth embodiment of the present disclosure will be described.

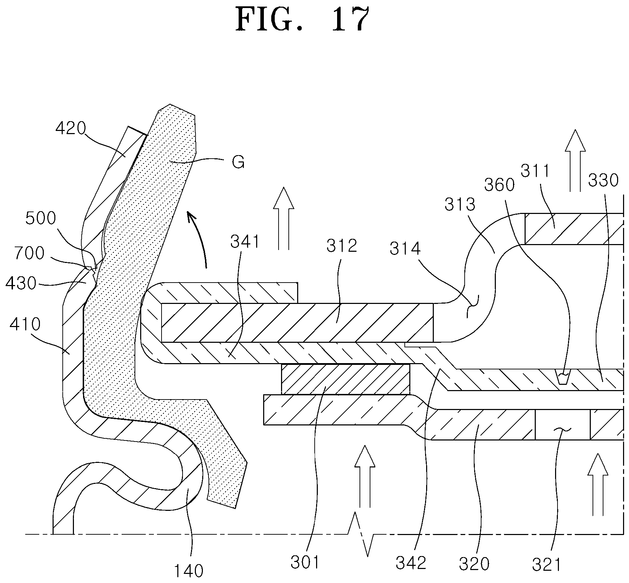

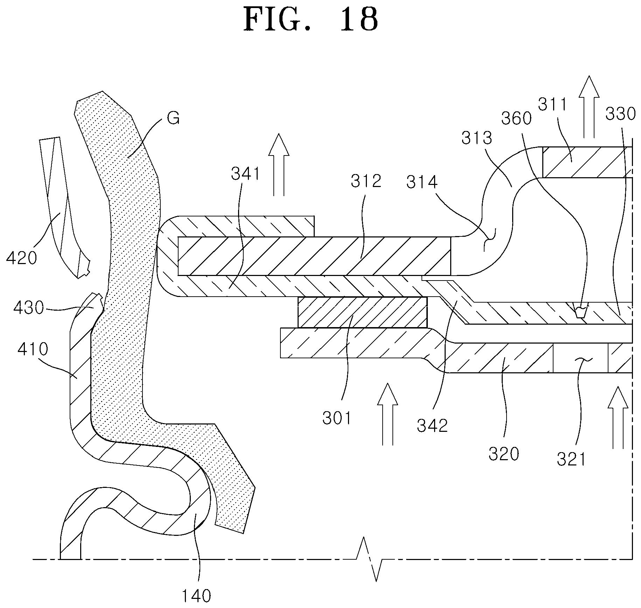

FIGS. 17 and 18 are cross-sectional views schematically illustrating an operating process of the secondary battery according to the fifth embodiment of the present disclosure.

Referring to FIGS. 15 to 18, when the internal pressure of the case 100 increases due to the exothermic reaction of the electrode assembly 200, a pressing force is applied to the cap assembly 300 in the first direction (i.e., upward). The pressure applied to the cap assembly 300 is transmitted to the clamping part 400 through the gasket G. When the pressure applied to the cap assembly 300 exceeds a set pressure, a partial region of the clamping part 400 extending from the second clamping body 420 to the notch 500 is deformed relative to the notch 500. More specifically, as the depth t3 of the sub-notch 600 is less than the depth t2 of the notch 500, both sides of the bent part 430 are initially spread apart. Accordingly, the second clamping body 420 and a partial region of the bent part 430 located on one side of the notch 500 are moved in a direction away from the central axis C of the case 100.

When both sides of the bent part 430 are spread apart beyond a set angle, the bent part 430 fractures around the central axis of the fracture notch 700. The second clamping body 420 and a partial region of the bent part 430 located on one side of the notch 500 are separated from the case 100 and detached to outside of the case 100.

Thereafter, the cap assembly 300 is moved in the first direction (i.e., upward), separated from the clamping part 400 and gasket G, and detached from the case 100. The opening 130 is thereby opened. Accordingly, gases or the like generated inside the case 100 may be discharged to outside of the case 100 through the opening 130, and the internal pressure of the case 100 may be reduced.

Hereinafter, a battery pack including the secondary battery 2 according to various embodiments of the present disclosure will be described.

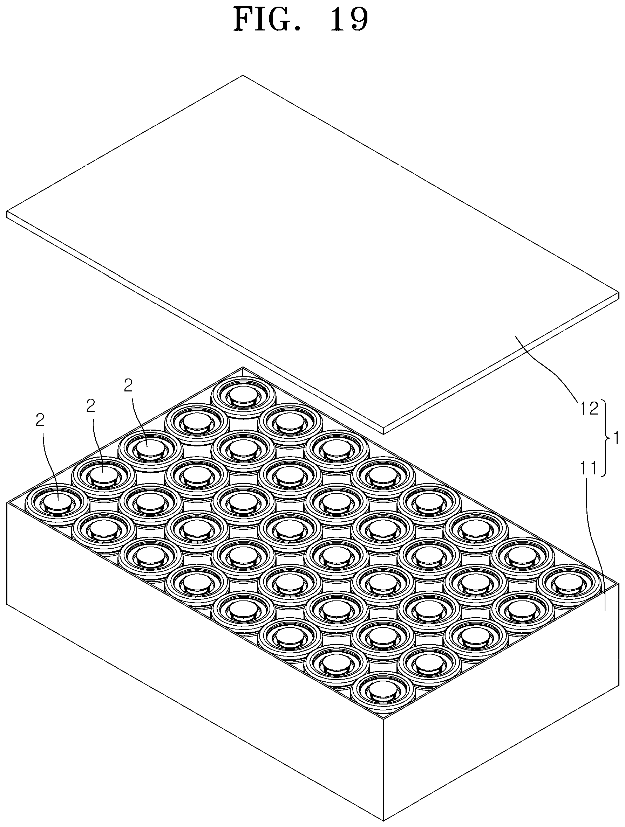

FIG. 19 is a perspective view schematically illustrating a configuration of the battery pack according to various embodiments of the present disclosure. Referring to FIG. 19, the battery pack includes a housing 1 and secondary batteries 2.

The housing 1 forms a schematic exterior of the battery pack and provides a space in which the secondary batteries 2 may be accommodated. The housing 1 according to the present embodiment may include a housing body 11 and a cover 12.

The housing body 11 may be formed to have a box shape, with an interior and an open side. A cross-sectional shape of the housing body 11 is not limited to the quadrangular shape shown in FIG. 19, but rather may be various shapes such as a polygonal shape, a circular shape, and an oval shape.

The cover 12 may be coupled to the housing body 11 and may close an internal space of the housing body 11. As an example, the cover 12 may be formed to have a substantially plate shape and may be disposed to face the open side of the housing body 11. The cover 12 may be fixed to the housing body 11 by various types of coupling methods such as bolting, welding, fitting, and the like.

Secondary batteries 2 may be disposed inside the housing 1. The secondary batteries 2 may be any of the secondary batteries 2 according to the embodiments described above.

A plurality of secondary batteries 2 may be provided. The plurality of secondary batteries 2 may be disposed in the housing 1 in various patterns, such as a grid shape and a zigzag shape. The plurality of secondary batteries 2 may be arranged side by side. The number of the secondary batteries 2 may be varied depending on the size, shape, or the like of the housing 1.

The plurality of secondary batteries 2 may be electrically connected by bus bars (not shown). The plurality of secondary batteries 2 may be connected in series or in parallel by the bus bars. As an example, in the housing 1 the bus bars may connect the secondary batteries 2 disposed in the same row in parallel and connect the secondary batteries 2 disposed in two adjacent rows in series. The bus bars may be formed of an electrically conductive material such as copper, aluminum, nickel, or the like.

According to the present disclosure, in the event of an abnormality such as ignition or thermal runaway of a secondary battery, a clamping part deforms relative to a notch, thereby allowing a cap assembly to detach from a case and thereby preventing the case from exploding or being damaged.

According to the present disclosure, in the event of an abnormality such as ignition or thermal runaway of a secondary battery, a notch and a sub-notch can distribute the amount of deformation of a clamping part across different locations, thereby preventing damage to adjacent components caused by a fracture of the clamping part.

According to the present disclosure, in the event of an abnormality such as ignition or thermal runaway of a secondary battery, a clamping part can fracture at a fracture notch, thereby allowing a cap assembly to quickly detach.

The effects obtainable through the present disclosure are not limited to the above-described effects, and other technical effects that are not mentioned will be clearly understood by those skilled in the art.

While the present disclosure has been described with reference to embodiments shown in the drawings, these embodiments are merely illustrative and it should be understood that various modifications and equivalent other embodiments can be derived by those skilled in the art on the basis of the embodiments.

## Claims

1. A secondary battery (2) comprising:
a case (100);
an electrode assembly (200) accommodated inside the case (100);
a cap assembly (300) facing the electrode assembly (200); and
a clamping part (400) extending from the case (100) and surrounding the cap assembly (300),
wherein a notch (500) is formed from an inner side surface of the clamping part (400).

2. The secondary battery (2) as claimed in claim 1, wherein a distance (L2) from a central axis of the case (100) to the notch (500) is greater than a distance (L1) from the central axis of the case (100) to an end portion of the cap assembly (300).

3. The secondary battery (2) as claimed in claim 1 or 2, wherein the electrode assembly (200) and the cap assembly (300) face each other in a first direction,
wherein the clamping part (400) comprises:
a first clamping body (410) disposed parallel to the first direction;
a second clamping body (420) connected to the first clamping body (410); and
a bent part (430) disposed between the first clamping body (410) and the second clamping body (420), and
wherein the notch (500) is concave from an inner side surface of the bent part (430).

4. The secondary battery (2) as claimed in claim 3, wherein an angle between a central axis of the case (100) and a central axis of the notch (500) is greater than or equal to 30° and less than or equal to 45°.

5. The secondary battery (2) as claimed in claim 3 or 4, wherein a length (L3) from an end portion of the second clamping body (420) to the notch (500) is greater than or equal to 1.4 mm and less than or equal to 3 mm.

6. The secondary battery (2) as claimed in claims 3 to 5, wherein a ratio of a depth (t2) of the notch (500) to a thickness (t1) of the bent part (430) is greater than or equal to 0.5 and less than or equal to 0.9.

7. The secondary battery (2) as claimed in claims 3 to 6, wherein the notch (500) is narrower in width toward an outer side surface of the bent part (430).

8. The secondary battery (2) as claimed in claims 3 to 7, wherein the notch (500) comprises a first recess (510) extending from the inner side surface of the bent part (430) and a second recess (520) connected to the first recess (510) and extending from the first recess (510) toward an outer side surface of the bent part (430), and
wherein a width of the second recess (520) is less than a width of the first recess (510).

9. The secondary battery (2) as claimed in claims 3 to 8, wherein a plurality of notches are provided, and
wherein the notches are arranged in a direction that the bent part (430) extends.

10. The secondary battery (2) as claimed in claims 3 to 9, further comprising a sub-notch (600) spaced apart from the notch (500) and formed in the second clamping body (420) and/or wherein a depth of the sub-notch (600) is less than a depth of the notch (500).

11. The secondary battery (2) as claimed in claims 1 to 10, further comprising a fracture notch (700) that is concave from an outer side surface of the clamping part (400) and positioned to face the notch (500).

12. The secondary battery (2) as claimed in claim 11, wherein a depth of the fracture notch (700) is less than a depth of the notch (500).

13. The secondary battery (2) as claimed in claims 1 to 12, further comprising a gasket (G) disposed between the clamping part (400) and the cap assembly (300).

14. The secondary battery (2) as claimed in claims 1 to 13, wherein the cap assembly (300) further comprises an upper cap hole (314) formed in the upper cap (310) to discharge gases generated inside the case (100) to outside of the case (100).

15. A battery pack comprising;
a housing (1); and
a plurality of secondary batteries (2) accommodated inside the housing (1),
wherein each of the secondary batteries (2) comprises:
a case (100);
an electrode assembly (200) accommodated inside the case (100);
a cap assembly (300) facing the electrode assembly (200);
a clamping part (400) extending from the case (100) and surrounding the cap assembly (300); and
a notch (500) that is concave from an inner side surface of the clamping part (400).
